# EUROPEAN PATENT APPLICATION

(11) **EP 2 836 051 A1**
(43) Date of publication of application: **11.02.2015**
(21) Application number: 12873753.3
(22) Date of filing: 31.05.2012
(51) Int. Cl.: H04W 88/02

(54) **METHOD AND DEVICE FOR DIALING REFUSED CALL BY USING USER IDENTIFICATION CARD**

(30) Priority: 01.04.2012 CN 201210094167
(71) Applicant: ZTE Corporation, Shenzhen, Guangdong 518057 (CN)
(72) Inventor: CAO, Zhentian, Shenzhen Guangdong 518057 (CN)
(74) Representative: Brevalex
(86) International application number: PCT/CN2012/076360
(87) International publication number: WO 2013/149431

(57) **Abstract**

A method and a device for dialing a refused call by using a user identification card are disclosed. The method includes receiving the notification of a hang-up event sent from a mobile terminal, and controlling the mobile terminal to call the incoming number of the hang-up event by using a Subscriber Identity Module Application Toolkit (STK) application. The method and the device for dialing a refused call by using a user identification card disclosed herein enable a user to call a refused call back at a fixed time by using a user identification card, thus, the user can use the function of dialing a refused number at any time as long as the user identification card is unchanged, even though the user changes the mobile terminal.

## Description

### FIELD

The disclosure relates to the field of communications, and more particularly to a method and a device for dialing a refused call by using a user identification card.

### BACKGROUND

At present, most of mobile terminals adopt a machine-card separated mode, that is, a user may use different telephone numbers by changing Subscriber Identity Module (SIM) cards or User Identity Model (UIM) cards. An SIM card, which is also called a user identity card, is used by the Global System for Mobile Communications (GSM) digital mobile terminal in a machine-card separated mode. The SIM card stores the information, the secret key and other information of a digital mobile telephone user in a chip for a GSM network to authenticate the identity of the user and encrypt the voice information of the user in a call. The User Identity Model is a mobile communication terminal user identification and encryption technology initiated by China Unicom and supported by the Internal Code Division Multiple Access (CDMA) Development Group (CDG). The UIM supports a dedicated authentication and encryption algorithm and the Over The Air (OTA) technology and can update and manage the data in a card in a radio air interface manner. Having similar function with the SIM card used in a GSM mobile terminal, an UIM card can identify a user and encrypt a communication and store telephone numbers, contacts, short messages and other personal information of the user.

On a machine-card separated mobile terminal, a user may refuse an incoming call and answer the refused call at a scheduled time in the following way: the user manually answers the refused call when the scheduled time is reached. In this case, the user needs to keep reminding himself/herself of answering the call, which is inconvenient for the user. Thus, some mobile terminals are provided with a function of redialing a refused call at a given time; however, provided by a mobile terminal, this function is unavailable once the user changes the mobile terminal, which undermines user experience.

### SUMMARY

The disclosure is mainly intended to provide a method and a device for dialing a refused call by using a user identification card, which are capable of achieving a function of calling a refused call back by using a user identification card and improving user experience.

The disclosure provides a method for dialing a refused call by using a user identification card, including that:
a user identification card receives the notification of a hang-up event from a mobile terminal; and
the user identification card controls the mobile terminal to call the incoming number in the hang-up event using a Subscriber Identity Module Application Tool Kit (STK) application.

Preferably, before the user identification card controls, using an STK application, the mobile terminal to call the incoming number in the hang-up event, the method may further include:
starting STK applications of the user identification card and the mobile terminal; and
setting the STK application of the mobile terminal to be 'cancel timed calling of refused number'.

Preferably, the process that the user identification card controls, using an STK application, the mobile terminal to call the incoming number in the hang-up event includes that:
the user identification card reports an active command requiring the mobile terminal to input a text and controls the mobile terminal to prompt a user to input dialing information;
the user identification card records the dialing information input by the user; and
the user identification card reports an active command requiring the mobile terminal to initiate a call and controls the mobile terminal to initiate a call according to the dialing information;

Preferably, the method further may include:
reporting an active command requiring the mobile terminal to send a short message and controlling the mobile terminal to send a prompt short message to the incoming number in the hang-up event.

Preferably, the user identification card may be an SIM card or an UIM card.

The disclosure also provides a device for dialing a refused call by using a user identification card, including:
a receiving module configured to receive the notification of a hang-up event sent from a mobile terminal; and
a control module configured to control, using an STK application, the mobile terminal to call the incoming number in the hang-up event.

Preferably, the device further may include:
a starting module configured to start the STK application of the user identification card and that of the mobile terminal; and
a setting module configured to set the STK application of the mobile terminal to be 'cancel timed calling of refused number'.

Preferably, the control module may include:
a report unit configured to report an active command requiring the mobile terminal to input a text and control the mobile terminal to prompt the user to input dialing information; and
a recording unit configured to record the dialing information input by the user;

The report unit is also configured to report an active command requiring the mobile terminal to initiate a call and control the mobile terminal to initiate a call according to the dialing information.

Preferably, the report unit is also configured to report an active command requiring the mobile terminal to send a short message and control the mobile terminal to send a prompt short message to the incoming number in the hang-up event.

Preferably, the user identification card may be an SIM card or an UIM card.

By dialing a refused call back at a fixed time through a user identification card, the method and the device for dialing a refused call by using a user identification card enable a user to use the function of dialing a refused number at any time as long as the user identification card is unchanged, even though the user changes the mobile terminal.

### BRIEF DESCRIPTION OF THE DRAWINGS

Fig. 1 is a flowchart schematically illustrating a method for dialing a refused call by using a user identification card according to an embodiment of the disclosure;
Fig. 2 is a schematic diagram illustrating the structure of a device for dialing a refused call by using a user identification card according to an embodiment of the disclosure; and
Fig. 3 is a schematic diagram illustrating the structure of a control module of a device for dialing a refused call by using a user identification card according to an embodiment of the disclosure.

### DETAILED DESCRIPTION

It should be appreciated that the specific embodiments described herein are merely illustrative of but are not to be construed as limiting the disclosure.

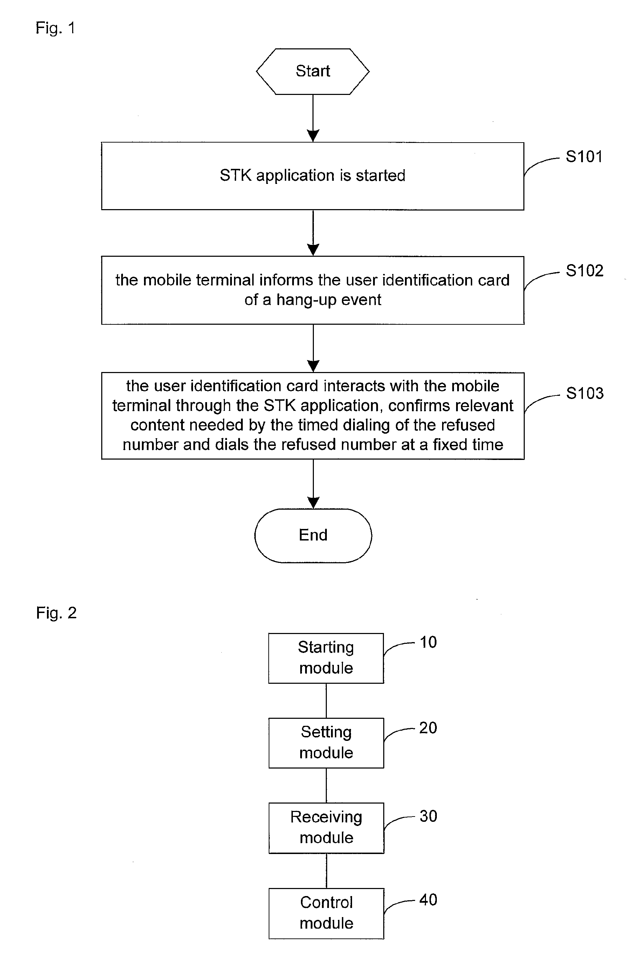

Refer to Fig. 1 in which an embodiment of a method for dialing a refused call by using a user identification card provided herein is shown, the method of the embodiment is suitable for the following mobile terminals and users: 1: a machine-card separated mobile terminal, that is, the user identification card of the mobile terminal is pluggable, wherein the user identification card includes all kinds of user identification cards those skilled in the art can think of, including SIM cards and UIM cards; 2: user identification cards and mobile terminals supportive to an STK application, wherein the STK (SIM TOOL KIT), the abbreviation for Subscriber Identity Module Application Toolkit, is used by mobile operating companies to achieve value-added services. If a user identification card and a mobile terminal support an STK application, then the user can interact with the user identification card through the STK application of the mobile terminal. The user identification card can report an active command to require the mobile terminal to complete a certain function, for example, to send a short message.

The method specifically includes the following steps:
S101: an STK application is started, a menu 'open timed dialing of refused number' is set according to the selection of a user, and the user identification card reports an active text display command to require the mobile terminal to display a dialog box displaying prompt information 'open service?'. If the user selects 'Confirm', the mobile terminal opens the service; otherwise, the flow is ended. The menu 'open timed dialing of refused number' is changed to a menu 'cancel timed dialing of refused number' when the STK application is started again, indicating that the service is successfully opened;
S102: after receiving an incoming call and refusing the call according to the selection of the user, the mobile terminal informs the user identification card of the hang-up event through an Envelope command;
S103: after receiving the notification of the hang-up event, the user identification card interacts with the mobile terminal through the STK application, confirms relevant content needed by the timed dialing of the refused number and dials the refused number at a fixed time.

The user identification card first reports an active text input command to require the mobile terminal to display an edit box, wherein the defaulted text reported by the user identification card may be, for example, 'wait a moment please, I will call back later'. A corresponding content is confirmed according to the selection of the user; otherwise, the flow is ended. Sequentially, the user identification card reports an active text input command again to require the user to input the telephone number to be called back and confirms and records the telephone number according to the selection of the user, otherwise, the flow is ended.

When confirming the telephone number input by the user, the user identification card records the telephone number input by the user, that is, the refused number, while reporting an active short message sending command to require the mobile terminal to send a short message like 'wait a moment please, I will call back later' to the input telephone number.

Sequentially, the user identification card reports an active text input command to require the user to input a fixed time The fixed time may be in a fixed format, for example, 1:6, which represents 1 hour and 6 minutes. If the user inputs '1:6' and presses the button 'Confirm', then the mobile terminal confirms the timing. When the timing, such as 1 hour and 6 minutes, elapses, the user identification card reports an active text display command. The mobile terminal displays 'time is up, call 'XXX'?', the user identification card reports an active call initiation command according to the selection of the user, for example, the click of the button 'Confirm', so as to require the mobile terminal to call a specified telephone number, thereby achieving the calling of the refused call at the fixed time, otherwise, the flow is ended.

It should be noted that during the interaction of the user identification card with the mobile terminal described in Step S103, the sequence of the interaction commands is variable, for example, it could be that the user is required to input a given time first, then the user is required to input a telephone number, and last the mobile terminal is required to send a short message. The disclosure is not limited to the example given herein.

By using the STK application, a function of dialing a refused number at a given time is achieved through active commands of the STK in the embodiment. Thus, the function is available to the user as long as the user identification card is unchanged, even though the user changes the mobile terminal.

Fig. 2 is a schematic diagram illustrating the structure of a device for dialing a refused call by using a user identification card according to an embodiment of the disclosure, and refer to Fig. 2, the device includes:
a starting module 10 configured to start STK applications of the user identification card and a mobile terminal;
a setting module 20 configured to set the STK application of the mobile terminal to be 'cancel timed calling of refused number';
a receiving module 30 configured to receive the notification of a hang-up event sent from the mobile terminal; and
a control module 40 configured to control, using an STK application, the mobile terminal to call the incoming number in the hang-up event.

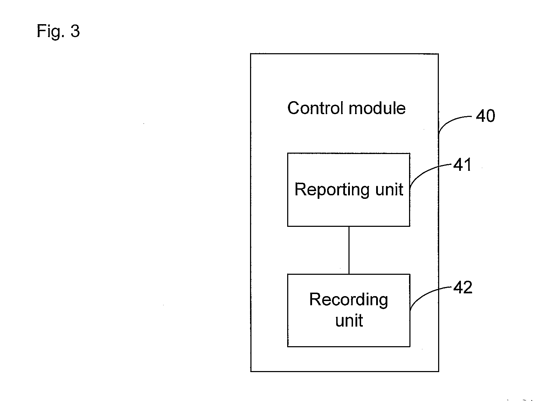

Refer to Fig. 3, the control module 40 may specifically include:
a report unit 41 configured to report an active command requiring the mobile terminal to input a text and control the mobile terminal to prompt the user to input dialing information; and
a recording unit 42 configured to record the dialing information input by the user.

The report unit 41 is also configured to report an active command requiring the mobile terminal to initiate a call and control the mobile terminal to initiate a call according to the dialing information, and report an active command requiring the mobile terminal to send a short message and control the mobile terminal to send a prompt short message to the incoming number in the hang-up event.

The device of the embodiment may be a user identification card or a device outside a user identification card. The embodiment is suitable for the following mobile terminals and users: 1. a machine-card separated mobile terminal, that is, the user identification card of the mobile terminal is pluggable, wherein the user identification card includes all kinds of user identification cards those skilled in the art can think of, including SIM cards and UIM cards; 2. user identification cards and mobile terminals supportive to an STK application.

The working principle of the device of the embodiment is as follows:
the starting module 10 starts an STK application, the setting module 20 sets a menu 'open timed dialing of refused number' according to the selection of the user, and the user identification card reports and displays an active text display command. The mobile terminal is required to display a dialog box displaying prompt information 'open service?'. If the user selects 'Confirm', the mobile terminal opens the service; otherwise, the flow is ended. The menu 'open timed dialing of refused number' is changed to a menu 'cancel timed dialing of refused number' when the STK application is started again, indicating that the service is successfully opened.

After receiving an incoming call and refusing the call according to the selection of the user, the mobile terminal informs the user identification card of the hang-up event through an Envelope command. After the receiving module 30 receives the notification of the hang-up event, the control module 40 interacts with the mobile terminal through the STK application, confirms relevant content needed by the timed dialing of the refused number and dials the refused number at a fixed time, which process specifically includes:
the report unit 41 first reports an active text input command to require the mobile terminal to display an edit box; the defaulted text reported by the report unit 41 may be, for example, 'wait a moment please, I will call back later'. A corresponding content is confirmed according to the selection of the user; otherwise, the flow is ended. Sequentially, the report unit 41 reports an active text input command again to require the user to input the telephone number to be called back, and the recording unit 42 confirms and records the telephone number according to the selection of the user, otherwise, the flow is ended.

When confirming the telephone number input by the user, the recording unit 42 records the telephone number input by the user, that is, the refused number, meanwhile, the reporting unit 41 reports an active short message sending command to require the mobile terminal to send a short message like 'wait a moment please, I will call back later' to the input telephone number.

Sequentially, the report unit 41 reports an active text input command to require the user to input a fixed time. The fixed time may be in a fixed format, for example, 1:6, which represents 1 hour and 6 minutes. If the user inputs '1:6' and presses the button 'Confirm', then the mobile terminal confirms the timing. When the timing, such as 1 hour and 6 minutes, elapses, the reporting unit 41 reports an active text display command. The mobile terminal displays 'time is up, call 'XXX'?', the reporting unit 41 reports an active call initiation command according to the selection of the user, for example, the click of the button 'Confirm', so as to require the mobile terminal to call a specified telephone number, thereby achieving the calling of the refused call at the fixed time, otherwise, the flow is ended.

It should be noted that in the device, during the interaction of the user identification card with the mobile terminal, the sequence of the interaction commands is variable, for example, it could be that the user is required to input a fixed time first, then the user is required to input a telephone number, and last the mobile terminal is required to send a short message. The disclosure is not limited to the example given herein.

By using the STK application, the device of the embodiment achieves a function of dialing a refused number at a given time through active commands of the STK. Thus, the function is available to the user as long as the user identification card is unchanged, even though the user changes the mobile terminal.

The mentioned above are merely embodiments of the disclosure but are not to be construed as limiting the scope of the disclosure. It should be appreciated that any equivalent structure or flow devised based on the description and the accompanying drawings of the disclosure and the direct or indirect application of the disclosure to other related technical fields should all fall within the protection scope of the disclosure.

## Claims

1. A method for dialing a refused call by using a user identification card, comprising.
receiving, by a user identification card, a notification of a hang-up event sent from a mobile terminal; and
controlling, by the user identification card, the mobile terminal to call an incoming number in the hang-up event by using a Subscriber Identity Module Application Tool Kit (STK) application.

2. The method according to claim 1, further comprising: before the user identification card controls, using the STK application, the mobile terminal to call the incoming number in the hang-up event,
starting the STK application of the user identification card and an STK application of the mobile terminal; and
setting the STK application of the mobile terminal to be 'cancel timed calling of refused number'.

3. The method according to claim 1 or 2, wherein controlling, by the user identification card, the mobile terminal to call the incoming number in the hang-up event by using the STK application comprises:
reporting an active command requiring the mobile terminal to input a text and controlling the mobile terminal to prompt a user to input dialing information;
recording the dialing information input by the user; and
reporting an active command requiring the mobile terminal to initiate a call and controlling the mobile terminal to initiate a call according to the dialing information.

4. The method according to claim 3, further comprising:
reporting an active command requiring the mobile terminal to send a short message and controlling the mobile terminal to send a prompt short message to the incoming number in the hang-up event.

5. The method according to claim 1 or 2, wherein the user identification card is a Subscriber Identity Module (SIM) card or a User Identity Model (UIM) card.

6. A device for dialing a refused call by using a user identification card, comprising:
a receiving module configured to receive a notification of a hang-up event sent from a mobile terminal; and
a control module configured to control, using a Subscriber Identity Module Application Tool Kit (STK) application, the mobile terminal to call an incoming number in the hang-up event.

7. The device according to claim 6, further comprising:
a starting module configured to start the STK application of the user identification card and an STK application of the mobile terminal; and
a setting module configured to set the STK application of the mobile terminal to be 'cancel timed calling of refused number'.

8. The device according to claim 6 or 7, wherein the control module comprises:
a report unit configured to report an active command requiring the mobile terminal to input a text and control the mobile terminal to prompt a user to input dialing information; and
a recording unit configured to record the dialing information input by the user;
wherein the report unit is also configured to report an active command requiring the mobile terminal to initiate a call and control the mobile terminal to initiate a call according to the dialing information.

9. The device according to claim 8, wherein the reporting unit is also configured to:
report an active command requiring the mobile terminal to send a short message and control the mobile terminal to send a prompt short message to the incoming number in the hang-up event.

10. The device according to claim 6 or 7, wherein the user identification card is a Subscriber Identity Module (SIM) card or a User Identity Model (UIM) card.
